# EUROPEAN PATENT APPLICATION

(11) **EP 3 132 680 A1**
(43) Date of publication of application: **22.02.2017**
(21) Application number: 15181959.6
(22) Date of filing: 21.08.2015
(51) Int. Cl.: A01K 47/06, A01K 51/00

(54) **A SEPARATING APPARATUS AND METHOD FOR SEPARATING AN INSECT AND A SELECTING APPARATUS FOR SELECTING INSECTS FROM A GROUP OF INSECTS**

(71) Applicant: INP Greifswald Leibniz-Institut für Plasmaforschung und Technologie e. V., 17489 Greifswald (DE)
(72) Inventor: HÄNEL, Mattis, 17489 Greifswald (DE); DÜNNBIER, Mario, 17489 Greifswald (DE); WINTER, Jörn, 17489 Greifswald (DE)
(74) Representative: Schulz Junghans Patentanwälte PartGmbB

(57) **Abstract**

The present invention deals with a separating apparatus and method for separating an individual insect from a group of social insects which have a single cooperative dwelling, preferably honey bees, furthermore, the invention relates to a selecting apparatus for continuously selecting individual insects from a group of social insects which have a single cooperative dwelling, preferably honey bees, based on at least one predetermined feature of the individual insects, which are being continuously screened, and to a cooperative dwelling for social insects, preferably a man-made beehive. This invention in particular deals with control of the parasitic varroa destructor mite population by screening individual bees and separating such bees carrying mites from the bee colony within a beehive.

The proposed invention makes it feasible to carry out continuous screening of a group of insects throughout the season.

## Description

The present invention relates to a separating apparatus and method for separating an individual insect from a group of social insects, preferably honey bees, that inhabit a single cooperative dwelling. Furthermore, the present invention relates to a selecting apparatus for continuously selecting individual insects from a group of social insects, preferably honey bees, that inhabit a single cooperative dwelling, based on at least one predetermined feature of the individual insects, wherein the insects are screened continuously. Also, the present invention relates to a cooperative dwelling for social insects, preferably a man-made beehive. This invention in particular relates to the control of the parasitic varroa destructor mite population by screening individual bees and separating bees carrying mites from the bee colony.

Document WO 2013/143 552 A2 discloses an apparatus for diagnosis and screening of honey bees of a beehive regarding the varroa destructor mites and a method for image recognition of these parasites on the body of a bee.

In a first embodiment disclosed by said document, the bees are directed to different exits depending whether they carry a mite or not. To detect the mites, each honey bee is kept in an observation chamber as long as necessary to inspect that honey bee. The observation chamber has a size big enough for the honey bee to walk around in the chamber and spread its wings. During that period of observation of the honey bee in the observation chamber, pictures of the honey bee are taken and via an automated image recognition method, mites are detected on the body of the bee. As each honey bee is held back for the duration of the method for automated parasite recognition, this method cannot be considered a continuous screening of a beehive.

To nevertheless achieve a continuous screening of the honey bees, a second embodiment is disclosed in which a similar screening method is carried out. That apparatus includes a sensor unit and a unit for inactivating a detected mite, wherein the sensor is installed at the entrance aperture. If a honey bee walking towards the entrance aperture carrying a mite, by means of actuators an inactivation unit is aimed towards that honey bee and the mite is inactivated. Such an inactivation unit for example is laser radiation or a targeted ejected chemical substance. In addition to the great effort for detecting mites on a plurality of honey bees, it is a great technical challenge to adequately align the inactivation unit for each bee.

Further an apparatus is disclosed in document DE 20 2011 106 067 U1 according to which by means of a sensor, mites attached to the body of a honey bee are detected and a tool is provided that is configured to detach the detected mite from the body of the honey bee. For detection, the sensor is configured to recognize the specific size and colour of the mite.

According to the disclosure of this document, a tool might be a mechanical manipulator, one or more laser beams, electrically charged electrodes or an energetic radiation field. Furthermore, a continuous or pulsed fluid stream is known to be used as such a tool according to document DE 20 2011 108 378 U1.

However, according to the above mentioned two documents, a selection step based on presence of varroa mites is not being carried out.

According to document DE 20 2012 002 587 U1, an apparatus is disclosed which selects honey bees according to the feature "presence of varroa". By means of a sensor unit a honey bee carrying a mite is detected in a passage element. The sensor unit comprises for each passage element one or more cameras to take coloured pictures. These cameras are arranged outside the passage wall. Based on the signal from the sensor unit a tool is being provided to transport the positively detected honey bees into a collecting container. Said tool is a suction unit, an opening gate element or a controllable sliding element. The passage element can be used as passage aperture into the beehive. However, this apparatus comprises the following disadvantages:
a. During the separation step, the honey bee might be injured. Furthermore, collateral losses might happen within the passage element as honey bees might be crunched. Remaining parts of dead bee bodies can cause blockage of the passage and require time-consuming and repeated cleaning efforts.
b. Detection and selection are not spatially separated from each other. Therefore, the time frame for detection and selection depends on the walking speed of the respective honey bee. Thus, the time-interval of detection limits the maximum duration of the selection step. Further, the selection tool inheres certain properties that inhibit applying a suitable background for automated image recognition.
c. Per each passage element, at least one camera has to be installed. If a plurality of cameras is used, which is useful for the passage aperture of a beehive, the number of cameras rises proportionally. Thus, a mite-recognition from two sides with five passage elements therefore requires ten cameras.
d. Finally, the walking direction of the honey bees within the passage element is not fixed. Honey bees can pass the passage element from both sides. If honey bees enter the passage element from both sides at the same time and because the passage element has a diameter fitting to only one honey bee at a time, a traffic jam might occur. Therefore, the passage capacity is further limited, which in turn might have negative effects on the population of honey bees within the beehive.

The problems raised in the known prior art will be at least partially solved by the invention as described below. The features according to the invention are specified in the independent claims, wherein advantageous alternative embodiments will be disclosed in the dependent claims. The features of the claims can be combined in any technically meaningful way, and the explanations from the following specification as well as features from the figures that show additional embodiments of the invention can be considered as additions to the claimed subject matter.

The invention relates to a separating apparatus for separating an insect from a group of insects, preferably honey bees, which inhabit a single cooperative dwelling, the separating apparatus comprising at least the following components:
- a duct comprising an entrance side, an exit side, and a base, wherein the duct is passable by an insect by walking only;
- a switching means for separating a single insect from the group of insects, wherein the switching means is arranged between the entrance side and the exit side of the duct, and wherein the switching means is arranged to direct an insect to the exit side of the duct or to an separation opening. The separating apparatus is mainly characterised in that the switching means comprises a chamber configured for receiving a single insect, wherein the chamber of the switching means is movable between a passage position and a separation position,
wherein when the chamber is in the passage position, the chamber forms a passable connection for an insect between the entrance side and the exit side of the duct,
and when the chamber is in the separation position the chamber forms a passable connection to a separation opening for an insect within the chamber only, and the exit side is inaccessible at least for the insect within the chamber.

In the application when referred to an insect, it is referred to an insect of the group who cooperate in the common dwelling, e.g. the bees of a beehive, not to any parasites, co-habitants, or symbionts from another type of insects. Therefore, the properties of the apparatus are designed for these insects mainly.

The separating apparatus comprises a duct and a switching means between an entrance side and an exit side. The duct of the separating apparatus preferably forms part of a channel used by an insect to leave the cooperative dwelling and/or to return into the cooperative dwelling, wherein preferably a plurality of ducts and/or channels are provided for the passage of insects.

For one embodiment, either side of the duct can be an entrance side and an exit side, respectively. In a preferred second embodiment, the entrance and exit sides are fixed, e.g. by guiding the insects to approach from only one side, namely the entrance side. This second embodiment is preferably combined with a duct so narrow that the insect cannot turn direction of forward-walking. Preferably the insect can only walk (and not fly) within the duct that reduces confusion and probability of hurting itself.

By virtue of the switching means an insect can be directed through a separation opening by moving the switching means, e.g. like a lift, from the passage position into the separation position. The switching means has a chamber with a longitudinal extension to make sure that the insect within this chamber is not damaged when the chamber is moved.

Preferably, the switching means changes its position based on a positive signal from a screening station and, therefore, the separation is carried out automatically. In one embodiment the switching means is actuated by pressurised gas (e.g. air) and/or by a motor (e.g. electric servo). Alternatively, the switching means is moved by hand.

According to a preferred embodiment, the switching means further comprises a detector, e.g. an infrared-based reflection-sensor, to register the presence of an insect within the switching means. The respective signals are processed by means of a (preferably central) computer-processor. The computer-processor may carry out at least one of the following functions:
a. Detecting whether there is the (positively screened) insect in the switching means;
b. Checking whether the insect has left the switching means; and
c. Counting the insects having passed the switching means.

Counting the insects is important to take stock of the incoming and outgoing insects. Further, it is important to count the positively screened, i.e. for example the insects that carry a mite, and separated insects.

According to a further preferred embodiment of the separating apparatus, the switching means comprises a lid-portion having a first separating wall towards the entrance side, wherein the first separating wall has a first edge towards the base at the entrance side and said first edge is rounded, and wherein preferably the lid-portion has a second separating wall towards the exit side, wherein the first separating wall or the second separating wall has a second edge towards the base towards the exit side and said second edge is rounded.

According to this embodiment, the switching means has a lid-portion which blocks access from the duct into the chamber, when the switching means is in the separation position. In one embodiment, the lid-portion is arranged to block passage between the entrance side and the exit side. In another embodiment, the switching means forms another (separated) connecting duct for insects while being in the separation position. Then, a succeeding insect can pass through to the exit side. In a very preferred embodiment, the switching means forms two separate chambers which each can form a passable connection to at least one separation opening. In this embodiment, preferably one chamber is in the passage position while the other chamber is in the separation position.

Preferably, the lid-portion has a first separating wall with a first edge towards the entrance side of the duct. This first edge is rounded to inhibit injury to a following insect when the switching means is moved towards a wall of the duct. Further preferably, the lid-portion has a second separating wall with a second edge towards the exit side of the duct. This second edge is rounded, too, to inhibit injury to an insect in front of the insect to be separated from the group when the switching means is moved towards a wall of the duct.

According to a further preferred embodiment of the separating apparatus, in front of and adjacent to the chamber at the entrance side the base includes a cantilevered and/or elastic first lip, and preferably behind and adjacent to the chamber at the exit side, the base includes a cantilevered and/or elastic second lip, wherein the first lip, and preferably the second lip, is biased, so that the respective lip remains in a passage position when exposed to the weight of and/or force by at least one insect and the respective lip is deflectable by a force that is too small to impair a single insect.

According to this embodiment, at the entrance side there is a cantilevered and/or elastic first lip forming a wall of the duct. The first lip is deflected when the lid-portion moves downwards and an insect is not completely in the switching means but with some body part still outside in the duct at the entrance side. However, the first lip is biased such that it cannot be deflected by the weight of and/or force by at least one insect and, preferably, is supported in the passage position. In one embodiment the lip forms the base to walk on and the switching means is moved downwards from the passage position into the separation position. The lid-portion could engagingly put a force on the back of an insect having not yet entered the chamber completely. Then by means of the biased lip, the force is reduced by the deflection of the lip. The respective first edge of the lid-portion preferably is formed to motivate a succeeding insect to move back into the duct and/or to motivate the insect to be separated to move into the chamber and/or into the separation opening.

Preferably, at the exit side of the duct adjacent to the switching means there is a second lip working the same way as the first lip.

Alternatively or additionally, the lip(s) are supported (each) by a lip-supporting means at the chamber of the switching means fixing the lip(s) in the passage position. The lip(s) prevent damage to the insects as the pressure on an insect by the lid-portion is reduced by means of the deflecting lip(s) to a bearable pressure, e.g. slightly above body weight which an insect is exposed to frequently, for example by other insects of the group within the housing. Alternatively, the switching means from the passage position to the separation position moves sideward or upwards, wherein the respective side is not adjacent to a passage channel and, preferably, is carried out equally for each channel of a passage unit.

According to a further preferred embodiment of the separating apparatus, the chamber comprises a base-portion that is inclined downwardly towards the exit side, and preferably inclined upwardly from the entrance side.

According to this embodiment, the chamber has an inclined base-portion, preferably at the entrance side upwardly and at the exit side downwardly inclined. Thereby, it is achieved that an insect falls down quickly from the switching means, when it was moved into the separation position. Therefore, the probability of having an insect resting in the chamber and/or with some body part in the chamber is greatly reduced.

According to a further preferred embodiment of the separating apparatus, the switching means is movable by a motor and includes a vibrating means to vibrate the base-portion surface that is arranged to be walked on by an insect.

The separating apparatus is in particular useful in an automated environment. Therefore, it is preferred to use an electrical motor that can be easily implemented into a control circuit. Moreover, it is possible to move the switching means very quickly. Furthermore, preferably that chamber can be vibrated by a vibrating means, wherein the chamber preferably has a (e.g. helical) spring bearing.

According to a further preferred embodiment of the separating apparatus, the duct is so narrow that only one insect can pass the duct at a time, wherein preferably the duct has a guiding means allowing an insect to enter only from an entrance side.

In particular here, the measurements of the duct are configured for the insects of the group running the dwelling. For a beehive, spiders, ants, mites and other insects might still be able to pass the channel in parallel to a bee.

The guiding means for example is a hinged flap, which can be pushed open only from one side and, thus, making sure that entering and or leaving the duct is possible only from one side. In another embodiment, the guiding means has elastic lips and/or bristles which are pushed aside by an insect approaching from the entrance side and stiff or pushed closer together by an insect approaching from the exit side. It is preferred to locate the guiding means at the exit side of the duct so that entering from the wrong side is inhibited while entering the duct is not interfered by the guiding means.

According to a further aspect of the invention it is proposed a selecting apparatus for selecting insects from a group of insects, preferably honey bees, which inhabit a cooperative dwelling, based on at least one predetermined feature of the insects, wherein the insects are being screened when passing the selecting apparatus, the selecting apparatus comprising at least the following means:
- at least one channel passable by an insect;
- at least one screening station for detecting at least one predetermined feature of an insect, wherein the screening station is arranged at the channel;
- at least one separating apparatus.

The at least one channel has a longitudinal axis along which the channel is passable by an insect, and when the insect passes the at least one channel, the insect is inhibited to turn direction of forward-walking, and the at least one screening station is configured and arranged to screen insects passing the at least one channel.

The selecting apparatus preferably comprises a plurality of passage units and/or a passage unit comprises a plurality of channels. The channels can be of arbitrary cross-sectional shape, like square-shaped or round-shaped. Each of the channels is arranged to allow passage of only one of the insects at a time, and inhibits turning forward-walking direction.

At least one passage unit comprises a system - here the screening station - for detecting at least one predetermined feature of the insects, and a selecting apparatus. The screening station and the separating apparatus in one embodiment is one piece or in another embodiment at least partially modular. This selecting apparatus is suitable for continuous screening and selecting insects from a social group, e.g. honey bees, based on detection of a diseased insect or a parasite carrying insect, e.g. the varroa destructor mite, when trying to enter or when leaving a housing of a cooperative dwelling, e.g. a beehive.

If there is only one passage unit having such a screening and selection system, it is preferably arranged at the entrance (aperture) of the housing of the cooperative dwelling. Preferably, the aperture of the housing is only accessible via the selecting apparatus having channels only accessible from inside the housing, so to leave the housing, and channels only accessible from outside the housing, so to enter the housing, wherein for reasons of economy, preferably only the entrance channels comprise the screening station and the separating apparatus.

Within the channels at least one detector is arranged to count (target) insects, preferably optically, and to send the respective signals to a central processor, e.g. a microprocessor. In the processor the required separating command is generated and sent to the separating apparatus or even detailed control of the separating apparatus is carried out. It is preferred to utilise reflective infrared-light barrier(s).

In one embodiment the entire selection apparatus is adaptable to a prior art (man-made) housing by means of screws and/or clamping-connections. Alternatively the selecting apparatus is integrated into the bottom or forming the bottom of the housing.

According to a further preferred embodiment of the selecting apparatus, the at least one separating apparatus is an separating apparatus according to an embodiment as described above, wherein each duct and chamber of the separating apparatus forms part of one channel, and along the longitudinal axis, said duct is located in the at least one screening station or behind an exit aperture of the at least one screening station.

The above-described separating apparatus is in particular gentle to the insects and rarely does damage to the passing and separated insects. The separating apparatus is preferably located in walking direction behind the screening station in each single channel, in order to compensate delay in the selection process that is carried out after the screening is carried out. Therefore, the selection does not include a forced resting of each insect, preferably of none of the insects. This results in a high time efficiency of the group. For a beehive, the ratio between the number of bees and the amount of honey is not impaired by frequently stopping the busy workers. This allows ongoing screening and separation during the collecting period instead of only a single treatment for a short period of time.

According to a further preferred embodiment of the selecting apparatus, the at least one channel is so narrow that only one insect can pass the channel at a time, wherein preferably the at least one channel has a guiding means allowing an insect to enter into the channel only from an entrance opening.

In particular here, the measurements of the at least one channel are configured for the insects of the group running the dwelling. For a beehive, spiders, ants, mites and other insects might still be able to pass the channel in parallel to a bee. It is preferred to locate the guiding means at the exit opening of a channel so that entering from the wrong side is inhibited while entering a channel is not interfered by the guiding means.

According to a further preferred embodiment of the selecting apparatus, the guiding means includes at least one of the following features:
- a hinged flap which can be opened by an insect in one direction only, wherein preferably the flap is at least partially diaphanous;
- a plurality of bristles being arranged to form, preferably a frustum of, a cone.

The guiding means comprises for example a hinged flap that can be pushed open only from one side and, thus, making sure that entering and or leaving the duct is possible only from one side. In another embodiment, the guiding means has elastic lips and/or bristles which are pushed aside by an insect approaching from the entrance side and stiff or are pushed closer together by an insect approaching from the exit side.

According to a further preferred embodiment of the selecting apparatus, the at least one channel comprises an entrance opening and an exit opening, wherein at least one of the following parameters of the entrance opening is greater than the respective parameters of the exit opening:
- a width (wₑₙ,wₑₓ) of the respective opening,
- a height (hₑₙ,hₑₓ) of the respective opening, and
- a diameter (Dₑₙ,Dₑₓ) of the respective opening.

According to this embodiment, the entrance opening of a channel, e.g. an exit channel, is in striking distance to an exit opening of another channel, e.g. an entrance channel. The entrance opening is considerably bigger to make entering into that channel substantially easier and faster for the insects than entering into the narrower exit opening or the bigger entrance opening is even the only opening approached by the insects. Thereby, the insects enter quickly into the proper channels in walking direction. In a preferred embodiment one or a plurality of entrance opening(s) is/are successively branching down to single channels. This results in a fast and equal distribution over the channels.

According to a further preferred embodiment of the selecting apparatus, the screening station comprises a camera means having at least one, preferably colour-sensitive, camera to screen at least one channel by taking at least one picture of at least one passing insect at a time, wherein preferably the camera means is arranged to screen a plurality of channels.

The screening station comprises a sensor system, preferably a colour-sensitive camera means, comprising at least one, preferably two, cameras, which takes pictures of the insects, preferably from below and from above, preferably through diaphanous walls. A plurality of cameras can be arranged with an offset to each other such that a useful background (preferably one-colour only, e.g. white or black, or reflective) for each camera can be suitably arranged according to the respective camera alignment.

The sensor system further preferably includes a suitable illumination so that the at least one predetermined feature is made particularly perceptible for the camera means. Preferably, light from the invisible electromagnetic wave spectrum is used, such as for example infrared or ultraviolet.

According to a further preferred embodiment of the selecting apparatus, the camera means is configured to facilitate multispectral screening, wherein preferably the screening station is illuminated with light having a plurality of separated wave length bands, and thus facilitates multispectral screening. This supports a particularly good perception of a predetermined feature of the insect.

In a particular advantageous embodiment, the wavelength bands are clearly distinct from each other, e.g. blue light and red light. In one embodiment a corresponding plurality of cameras is applied to record the plurality of wave length bands each with a particularly configured camera. This is for example achieved by providing a narrowly configured light sensor and/or an optical filter. In another embodiment, different wave length bands are emitted at different points of time and the correspondingly configured camera is taking pictures at these time points or the camera is adapted to the just applied wave length band, e.g. by swapping to the corresponding optical filter. Additionally or alternatively, a beam splitter is comprised by the camera means in order to simultaneously recording pictures at different wavelength bands of the reflected illumination.

According to one embodiment, the distinct wavelength bands are applied after each other and, thus, the predetermined feature is successively illuminated with different wavelength bands. The feature is then recorded sequentially, preferably with only one camera.

Preferably, a dedicated magnification optic and a suitable corresponding pixel size (resolution) is used to make sure that the camera means does not need a plurality of cameras for the plurality of channels but very preferably only one (pair of) camera(s) for one or more passage units. In a very preferred embodiment, the screening station comprises at least one reflecting surface (mirror) that is arranged such that the insect can be viewed from different sides simultaneously by a single camera. That is, the camera surveys angle of 180°, preferably 360°, of the insect.

The recorded pictures or images are (continuously) analysed by a processor. First, the picture is (virtually) divided according to the channels so that each partial picture shows one channel only. Second, in each partial picture that shows an insect the predetermined features are searched for and - if present - are recognised. Such features for example are colour, size, shape, movement, reflection properties and/or a certain pattern of the target insect, e.g. a mite.

According to a further preferred embodiment of the selecting apparatus, the at least one channel comprises a detector to register the presence of an insect and/or to count the number of insects having passed a predetermined position in the at least one channel, preferably registering and/or counting insects at least one of the following locations:
- at the entrance opening of the channel,
- adjacent to the entrance side of the separating apparatus,
- within the separating apparatus, and
- behind the exit side separating apparatus.

In this embodiment, the at least one channel comprises an (additional) detector to detect whether there is an insect at said detection position and/or in the respective channel. Such a detector for example is an image recognition unit and/or an infrared sensor unit. The detector might also be the camera means of the screening station working in a stand-by modus. Preferably it is detected how many insects are in the respective channel(s) and/or where in the channel

According to a further aspect of the invention, it is proposed a cooperative dwelling for insects, preferably a man-made beehive, comprising at least the following components:
- a housing to store food and/or to house the insect brood;
- at least one aperture for the insects to leave the dwelling and to return into the dwelling. The cooperative dwelling is mainly characterised in that the at least one aperture comprises the selecting apparatus according to an embodiment as described above, wherein the selecting apparatus is the only facility to enter and/or leave the housing.

This dwelling is configured to be used throughout the entire season and/or for several seasons. This is possible as the impairing influence of the screening and separation on the insects work is marginal. The at least one selecting apparatus is located in the aperture(s), so to block any other facility to enter and/or leave the housing. Hence, that, preferably both, is only possible by passing through the selecting apparatus.

According to a further aspect of the invention, it is proposed a method for separating insects from a group of insects, preferably honey bees, which inhabit a single cooperative dwelling. The method is mainly characterised in that at least the following steps are carried out:
- directing an insect through a channel that is passable by the insects only one at a time by providing at least one entrance opening as the only facility to enter and/or to leave the housing of the cooperative dwelling, wherein an insect enters a channel through the entrance opening in which an insect is inhibited to turn direction of forward-walking;
- screening insects regarding predetermined features within the channel, wherein the orientation of the insects is defined by the channel;
- based on the screening results deciding by means of a processor whether the respective insect is to be separated from the group of social insects;
- based on a decision to separate the respective insect directing the respective insect through a separation opening and/or into a collecting container, preferably to treat the respective insect, so that the respective insect is inhibited to enter the housing,
wherein preferably the method is carried out by means of a selecting apparatus according to an embodiment as described above or by means of a cooperative dwelling according to an embodiment as described above.

The method is carried out fully automatically and does not need any human interaction. However, additional control and/or dynamic adaptations of the screening algorithm can be carried out with human support. For supervising purposes, in one embodiment the detected features and following decisions are stored and can be read-out later on. The processor preferably is a local microprocessor. In another embodiment, e.g. for industrial bee keeping, a central computer and/or central processor is used for at least several parts of the method. The method, therefore, may be stored on a specialised microprocessor. In another embodiment the method is stored on a computer-readable medium and/or may be provided on a server for downloading as a computer-program product and such can be easily implemented on a computer, for example a personal computer.

If the screening result shows no defect to an insect, the insect is not separated but passed on through into the housing and out of the housing, respectively. In particular in this case the method does not cause any delay to the insects travel way, except an extended entering and/or leaving duration in comparison to no screening caused by the length of the channel to be passed by each insect for screening and separation. This may be further reduced by allowing entering and/or leaving through additional aperture(s) - while these are too small to allow all insects to enter and/or leave at the rush hours.

The invention according to above description will be explained in detail based on the technical background, wherein reference is made to the corresponding drawings, which show preferred embodiments. The invention is not limited by those solely schematic drawings in any way. It is to be noted that the drawings are not to scale and cannot be considered for concluding proportions. It is shown in
- Fig. 1:: a selecting apparatus;
- Fig. 2a:: a separating apparatus in the passage position;
- Fig. 2b:: a separating apparatus in the separation position;
- Fig. 3a:: a first embodiment of a guiding means in open position;
- Fig. 3b:: a first embodiment of a guiding means in closed position;
- Fig. 4:: a second embodiment of a guiding means; and
- Fig. 5:: a camera means for a plurality of channels;
- Fig. 6:: a camera means for 360°-view using only one camera;
- Fig. 7:: a screening station with a mirror system; and
- Fig. 8:: a camera means using a beam-splitter for multispectral screening.

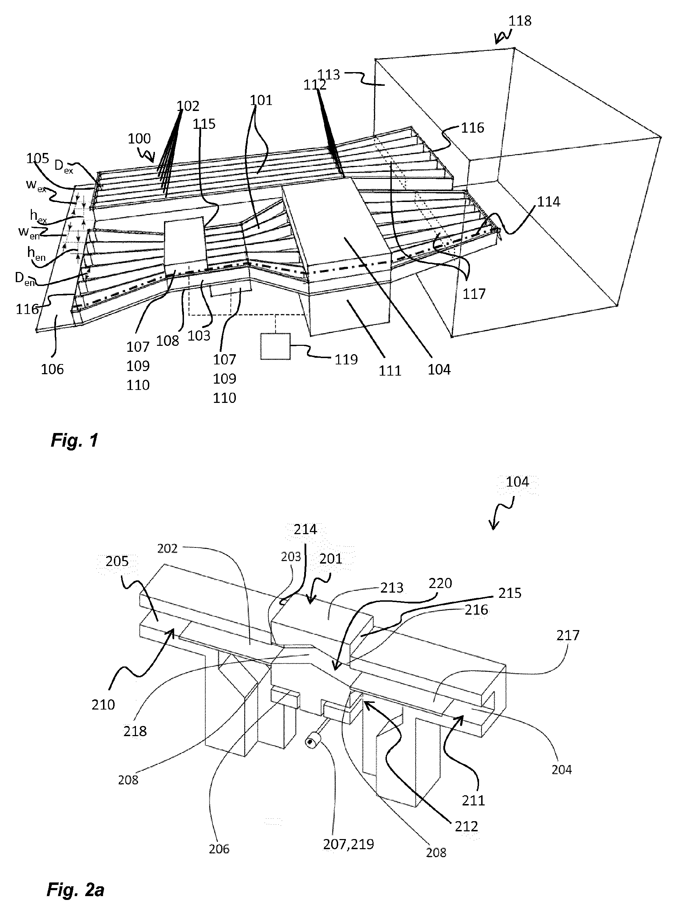

In Fig. 1 a selecting apparatus 100 is shown including two passage units 101, each comprising a plurality of channels 102 of arbitrary cross-sectional shape, like square-shaped or round-shaped. Each of the channels 102 is arranged to allow passage of only one of the insects at a time, and preferably inhibits turning forward-walking direction once entered the narrower main part.

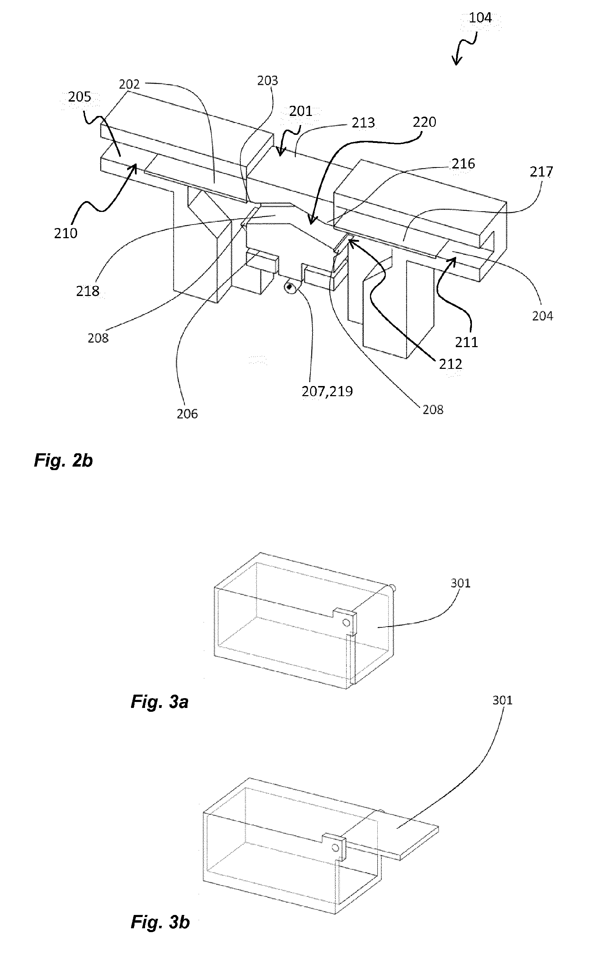

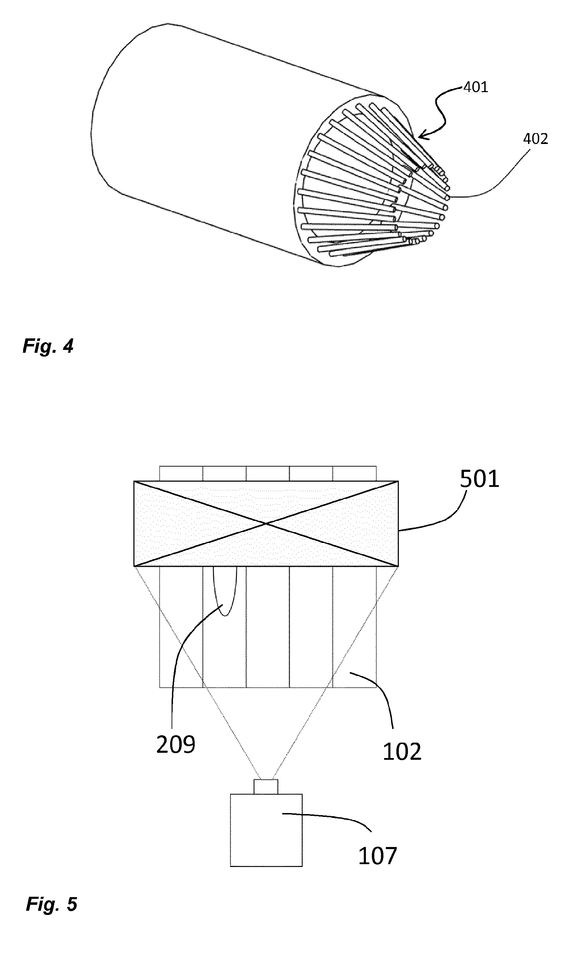

At least one passage unit 101 comprises a system for detecting predetermined features of the insects, here the screening station 103, and a selecting apparatus 104 that are spatially separated from each other. Each passage unit 101 includes a guiding means 301,401 (see figs. 3 and 4) to allow entering only from one (entrance) side (entrance opening 116) that is located at the exit opening 105.

The screening station 103, the separating apparatus 104 and the guiding means 301,401 can be one piece or at least partially modular. This selecting apparatus 100 is suitable for continuous screening and selecting insects from a social group, e.g. honey bees, based on detection of a disease of or parasite on the insect, e.g. varroa destructor mite, when trying to enter or when leaving a housing 113 of a cooperative dwelling 118, e.g. a beehive, in particular having a landing board 106 for flying insects.

The screening station 103 comprises a sensor system, preferably a colour-sensitive camera means 107, comprising at least one, preferably two, cameras, that takes pictures of the insects, preferably from below and from above, preferably through diaphanous walls. A plurality of cameras can be arranged with an offset to each other such that a suitable background 108 (preferably one-colour only, e.g. white or black, or reflective) for each camera can be suitably arranged according to the respective camera alignment. The sensor system further preferably comprises a suitable illumination 109 so that the predetermined feature is made particularly perceptible for the camera. Preferably, a special optic and pixel resolution is used to make sure that the camera means 107 does not need a plurality of cameras for the plurality of channels 102 but very preferably only one (pair of) camera(s) for one or more passage units 101.

Further, in a preferred embodiment the channels 102 comprise a detector 112 to detect whether there is an insect in said detection position and/or in the respective channel 102. Such a detector 112 for example is a picture recognition unit and/or an infrared sensor unit. Preferably it is detected how many insects are in the respective channel(s) 102 and/or where in the channel 102. In one embodiment such a picture recognition unit is arranged to observe all channels 102 of a screening station 103. The pictures are (continuously) analysed by a processor. First, the picture is divided according to the channels 102 so that each partial picture shows one channel 102 only. Second, in each partial picture that shows an insect the predetermined features are searched for and are recognised. Such features for example are colour, size, shape, movement, reflection properties and/or a certain pattern of the target insect or the parasite.

In one embodiment the entrance opening 116 of a channel 102, e.g. exit channel, is in striking distance to an exit opening 105 of another channel 102, e.g. entrance channel. The entrance opening is considerably bigger to make entering into that channel 102 substantially easier and faster for the insects than entering into the narrower exit opening 105 or the bigger entrance opening is even the only opening approached by the insects. Thereby, the insects enter quickly into the proper channels 102 in walking direction. In a preferred embodiment one or a plurality of entrance opening(s) 116 is/are successively branching down to single channels 102. This results in a fast and equal distribution over the channels 102.

If there is only one passage unit 101 having such a screening and selection system it is preferably arranged at the entrance (aperture 117) of the housing 113 of the cooperative dwelling 118. Preferably, the aperture 117 of the housing 113 is only accessible via the selecting apparatus 100 having channels 102 only accessible from inside the housing 113, so to leave the housing 113, and channels 102 only accessible from outside the housing 113, so to enter the housing 113, wherein for reasons of economy preferably only the entrance channels 102 comprise the screening station 102 and the separating apparatus 103.

Within the channels 102 at least one detector 112 is arranged to count (target) insects 209, preferably optically, and to send the respective signals to a central processor 119. In the processor 119 the required separating command is generated and sent to the separating apparatus 104 or even detailed control of the separating apparatus 104 is carried out. It is preferred to utilise reflective infrared-light barrier(s).

In one embodiment, the entire selection apparatus 100 is adaptable to a prior art (man-made) housing 113 by means of screws and/or clamping-connections.

In walking direction behind a screening station 103 there is a separating apparatus 104 in each single channel 102. This separating apparatus 104 preferably is provided as shown in figs. 2 and 3 and will be described in detail below.

In Fig. 2a and Fig. 2b a separating apparatus 104 is shown, comprising a duct 204 and a switching means 201 between an entrance side 210 and an exit side 211. By the switching means 201 an insect 209 can be directed through a separation opening 212 by moving the switching means 201 like a lift from the passage position (see Fig. 2a) into the separation position (see Fig. 2b). The switching means 201 has a longitudinal extension to make sure that the insect 209 within this portion of the duct 204 is not damaged. Preferably, the switching means 201 changes its position based on a positive signal from a screening station 103, as for example shown in Fig. 1 and described above, and, therefore, the separation is carried out automatically. The switching means 201 is actuated by pressurised gas (e.g. air) and/or by a motor 207 (e.g. electric servo). In this preferred embodiment the switching means 201 has a closing lid-portion 213 which blocks the duct 204 when the switching means 201 is in the separation position. Alternatively, the switching means 201 forms another (separated) connecting duct for insects while being in the separation position. Preferably, the closing lid-portion 213 has a first separating wall 214 with a first edge 203 towards the entrance side 210 of the duct 204. This first edge 203 is rounded to inhibit damage to a following insect when the switching means 201 is moved downwards. Further preferably, the lid-portion 213 has a second separating wall 215 with a second edge 216 towards the exit side 211 of the duct 204. This second edge 216 is rounded, too, to inhibit damage to an insect in front of the insect 209 to be separated from the group when the switching means 201 is moved downwards. Very preferably, at the entrance side 210 there is a biased first lip 202 forming the base 205 to walk on. The biased lip 202 is deflected when the lid-portion 213 moves downwards and an insect 209 is not completely in the switching means 201 but with some body part still outside in the duct 204 at the entrance side 210. However, the biased lip 202 cannot be deflected by the weight of at least one insect 209. Preferably, at the exit side 211 of the duct adjacent to the switching means 201 there is a second biased lip 217 working the same way as the first biased lip 202.

Alternatively or additionally, the lip(s) are supported (each) by lip-supporting means 208 at the chamber of the switching means 201 fixing the lip(s) in the passage position. The lip(s) prevent damage to the insects 209 as the pressure on an insect by the lid-portion 213 is reduced by means of the deflecting lip(s) to a bearable pressure, e.g. slightly above body weight which an insect is exposed to usually by other insects of the group within the housing 113. Alternatively, the switching means 201 from the passage position to the separation position moves sideward or upwards, wherein the respective side is not adjacent to a passage channel 102 and, preferably, is carried out equally for each channel 102 of a passage unit 101.

To achieve that, an insect moves quickly through the switching means 201 has an inclined base-portion 220, preferably at the entrance side 210 upwardly and at the exit side 211 downwardly inclined. Furthermore, preferably that chamber 218 and/or base-portion 220 can be is vibrated by a vibrating means 219, wherein the chamber 218 preferably has a helical spring bearing 206.

According to one preferred embodiment the switching means 201 further includes a detector 112, e.g. an infrared-based reflection-sensor, to register the presence of an insect 209 within the switching means 201. The respective signals are processed by means of a (preferably central) computer-processor. It may have at least one of the following functions:
a. Detecting whether there is the (positively screened) insect 209 in the switching means 201;
b. Checking whether the insect 209 to be separated or to pass has left the switching means 201; and
c. Counting the insects having passed the switching means 201.

Counting the insects is important to take stock of the incoming and outgoing insects. Further, it is important to count the positively screened and separated insects. Given that from a row of insects the *n^{th}* insect 209 is screened positive and the detector 112 has yet only *n-m* insects 209 detected the switching means 201 is activated by the selection system just for the *m^{th}* insect is in the chamber 218. That is when further m insects 209 were detected at or in the switching means 201.

The walking direction of the insects in each channel is forced by a guiding means, e.g. a hinged flap 301 or a bristle cone 401. Such are shown in Fig. 3a, Fig. 3b and Fig. 4, respectively. Both guiding means preferably are located at the exit opening 105 of the channels so that the insects are not scared off to enter the channels.

The hinged flap 301 according to Fig. 3a and Fig. 3b can be opened by pushing only in the walking direction. In this embodiment the flap is pivotably supported at the upper top side. However, in one embodiment the flap is pivotably supported at the base and biased so that it will be opened by means of an insect 209. An insect approaching from the other direction cannot enter as the channel is closed and the flap cannot be opened from outside the exit opening 105. The flap 301 preferably is diaphanous, e.g. a lattice, transparent plastics or the like.

The bristle cone 401 according to Fig. 4 has a plurality of elastic bristles 402 which can be deflected by an insect 209 approaching from inside the cone and will be rather closing when approached by an insect from outside the cone. However, the bristles 402 are soft enough not to damage approaching insects.

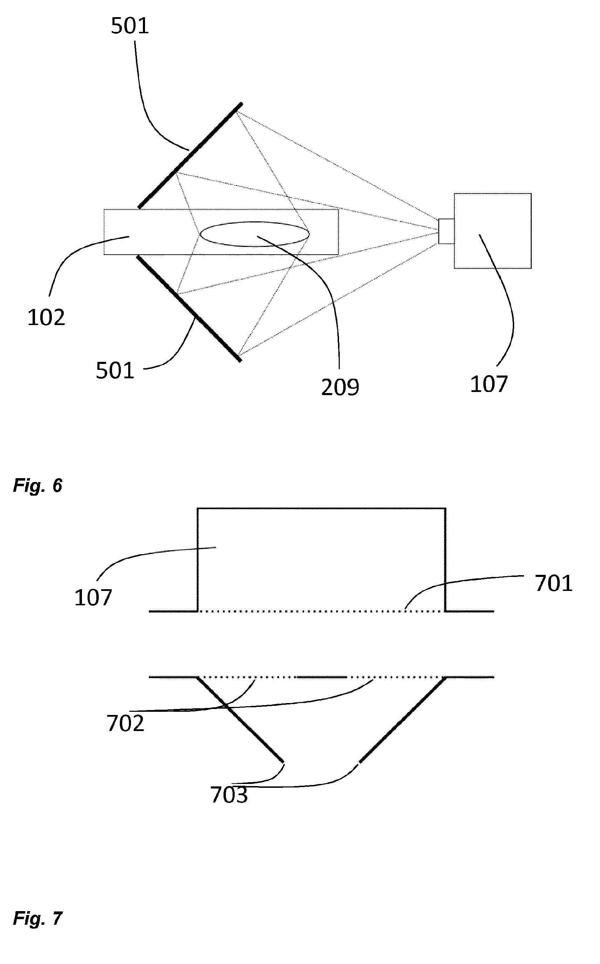

Fig. 5 shows a camera means 107 for a plurality of channels 102. By use of a reflective surface 501 the insect 209 can be screened with a camera means 107, preferably comprising only one single camera, from a different angle. This is in particular useful for the arrangement according to Fig. 6.

Fig. 6 shows a camera means 107, for example as shown in Fig. 5 for a plurality of channels 2, for allowing 360°-view onto the insect 209 using only one camera. Here, two reflective surfaces 501 are arranged to deflect the light to the camera means 107.

Fig. 7 shows a screening station 103 with a camera means 107 at one side of the channel(s) 102 and a mirror system having here two mirrors 703. Additionally, the channel(s) 102 at two sides has a first translucent wall 701 (at the side of the camera means 107) and a second translucent wall 702 on the opposite side of the channel(s) 102. This system reduces the amount of cameras necessary to obtain a maximum of the surface of the insect 209.

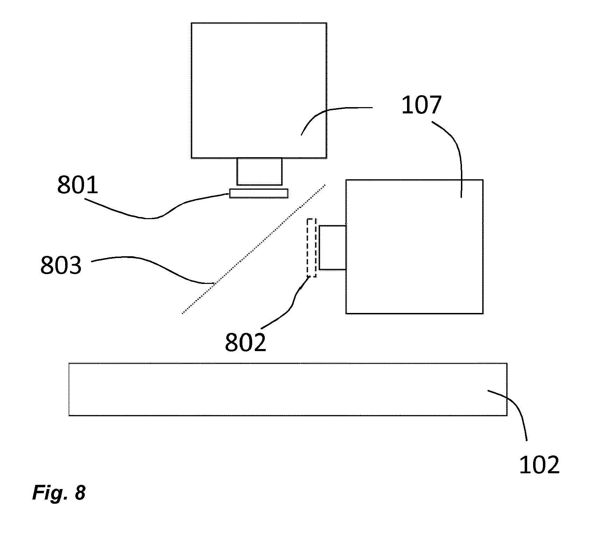

Fig. 8 shows a camera means 107 using a beam-splitter for multispectral screening. In this embodiment two cameras are arranged to receive light each having a different wave length by using the optical splitter 803 at 45° to the camera alignment. Additionally, the one camera has a first optical filter 801 corresponding to the spectrum let trough by the beam splitter 803 and the other camera has a second filter 802 corresponding to the spectrum deflected by the beam splitter 803.

The proposed invention makes it feasible to carry out continuous screening of a group of insects throughout the season.

**List of reference numerals**

| | | | |
|---|---|---|---|
| 100 | selecting apparatus | 219 | vibrating means |
| 101 | passage unit | 220 | base-portion |
| 102 | channel | | |
| 103 | screening station | 301 | hinged flap |
| 104 | separating apparatus | | |
| 105 | exit opening | 401 | bristle cone |
| 106 | landing board | 402 | bristles |
| 107 | camera means | | |
| 108 | optical background | 501 | reflective surface |
| 109 | illumination | | |
| 110 | optics | 701 | first translucent wall |
| 111 | collecting container | 702 | second translucent wall |
| 112 | detector | 703 | mirrors |
| 113 | housing | | |
| 114 | longitudinal axis | 801 | first optical filter |
| 115 | exit aperture | 802 | second optical filter |
| 116 | entrance opening | 803 | beam splitter |
| 117 | aperture | | |
| 118 | cooperative dwelling | | |
| 119 | processor | wₑₙ | width of the entrance opening |
| | | hₑₙ | height of the entrance opening |
| 201 | switching means | Dₑₙ | diameter of the entrance opening |
| 202 | first lip | wₑₓ | width of the exit opening |
| 203 | first edge | hₑₓ | height of the exit opening |
| 204 | duct | Dₑₓ | diameter of the exit opening |
| 205 | base | | |
| 206 | bearing | | |
| 207 | motor | | |
| 208 | lip-supporting means | | |
| 209 | insect | | |
| 210 | entrance side | | |
| 211 | exit side | | |
| 212 | separation opening | | |
| 213 | lid-portion | | |
| 214 | first separating wall | | |
| 215 | second separating wall | | |
| 216 | second edge | | |
| 217 | second lip | | |
| 218 | chamber | | |

## Claims

1. A separating apparatus (104) for separating an insect (209) from a group of insects, preferably honey bees, which inhabit a single cooperative dwelling (118), the separating apparatus (104) comprising at least the following components:
- a duct (204) comprising an entrance side (210), an exit side (211), and a base (205), wherein the duct (204) is passable by an insect (209) by walking only;
- a switching means (201) for separating a single insect (209) from the group of insects, wherein the switching means (201) is arranged between the entrance side (210) and the exit side (211) of the duct (204), and wherein the switching means (201) is arranged to direct an insect (209) to the exit side (211) of the duct (204) or to an separation opening (212),
**characterised in that**
the switching means (201) comprises a chamber (218) configured for receiving a single insect (209), wherein the chamber (218) of the switching means (201) is movable between a passage position and a separation position,
wherein, when the chamber (218) is in the passage position, the chamber (218) forms a passable connection for an insect (209) between the entrance side (210) and the exit side (211) of the duct (204),
and when the chamber (218) is in the separation position, the chamber (218) forms a passable connection to a separation opening (212) for an insect (209) within the chamber (218), and the exit side (211) is inaccessible.

2. The separating apparatus (104) according to claim **1, characterised in that** the switching means (201) comprises a lid-portion (213) having a first separating wall (214) towards the entrance side (210), wherein the first separating wall (214) has a first edge (203) towards the base (205) at the entrance side (210) and said first edge (203) is rounded, and wherein preferably the lid-portion (213) has a second separating wall (215) towards the exit side (211), wherein the first separating wall (214) or the second separating wall (215) has a second edge (216) towards the base (205) towards the exit side (211) and said second edge (216) is rounded.

3. The separating apparatus (104) according to claim **1 or 2, characterised in that** in front of and adjacent to the chamber (218) at the entrance side (210) the base (205) includes a cantilevered and/or elastic first lip (202), and preferably behind and adjacent to the chamber (218) at the exit side (211) the base (205) includes a cantilevered and/or elastic second lip (217), wherein the first lip (202), and preferably the second lip (217), is biased, so that the respective lip (202,217) remains in a passage position when exposed to the weight of and/or force by at least one insect and the respective lip (202,217) is deflectable by a force that is too small to impair a single insect.

4. The separating apparatus (104) according to any of the preceding claims, **characterised in that** the chamber (218) comprises a base-portion (220) which is inclined downwardly towards the exit side (211), and preferably inclined upwardly from the entrance side (210).

5. The separating apparatus (104) according to any of the preceding claims, **characterised in that** the chamber (218) comprises a base-portion (220) which is inclined downwardly towards the exit side (211), and wherein the switching means (201) is movable by a motor (207) and includes a vibrating means (219) to vibrate the base-portion (220) surface that is arranged to be walked on by an insect.

6. The separating apparatus (104) according to any of the preceding claims, **characterised in that** the duct (204) is so narrow that only one insect (209) can pass the duct (204) at a time, wherein preferably the duct (204) has a guiding means (301,401) allowing an insect (209) to enter only from an entrance side (210).

7. A selecting apparatus (100) for selecting insects (209) from a group of insects, preferably honey bees, which inhabit a cooperative dwelling (118) based on at least one predetermined feature of the insects (209), wherein the insects (209) are being screened when passing the selecting apparatus (100), the selecting apparatus (100) comprising at least the following means:
- at least one channel (102) passable by an insect (209);
- at least one screening station (103) for detecting at least one predetermined feature of an insect (209), wherein the screening station (103) is arranged at the channel (102);
- at least one separating apparatus (104),
**characterised in that**
the at least one channel (102) has a longitudinal axis (114) along which the channel (102) is passable by an insect (209), and when the insect passes the at least one channel, the insect (209) is inhibited to turn direction of forward-walking, and the at least one screening station (103) is configured and arranged to screen insects (209) passing the at least one channel (102).

8. The selecting apparatus (100) according to claim **7, characterised in that** the at least one separating apparatus (104) is an separating apparatus (104) according to any of the claims **1 to 6,** wherein each duct (204) and chamber (218) of the separating apparatus (104) forms part of one channel (102), and along the longitudinal axis (114) said duct (204) being located in the at least one screening station (103) or behind an exit aperture (115) of the at least one screening station (103).

9. The selecting apparatus (100) according to claim **7 or 8, characterised in that** the at least one channel (102) is so narrow that only one insect (209) can pass the channel (102) at a time, wherein preferably the at least one channel (102) has a guiding means (301,401) allowing an insect (209) to enter into the channel (102) only from an entrance opening (116).

10. The selecting apparatus (100) according to claim **9, characterised in that** the guiding means (301,401) includes at least one of the following features:
- a hinged flap (301) which can be opened by an insect (209) in one direction only, wherein preferably the flap (301) is at least partially diaphanous;
- a plurality of bristles (402) being arranged to form, preferably a frustum of, a cone (401).

11. The selecting apparatus (100) according to any of the claims **7 to 10, characterised in that** the at least one channel (102) comprises an entrance opening (116) and an exit opening (105), wherein at least one of the following parameters of the entrance opening (116) is greater than the respective parameters of the exit opening (105):
- a width (wₑₙ,wₑₓ) of the respective opening (116,105),
- a height (hₑₙ,hₑₓ) of the respective opening (116,105),
- a diameter (Dₑₙ,Dₑₓ) of the respective opening (116,105).

12. The selecting apparatus (100) according to any of the claims **7 to 11, characterised in that** the screening station (103) comprises a camera means (107) having at least one, preferably colour-sensitive, camera to screen at least one channel (102) by taking at least one picture of at least one passing insect (209) at a time, wherein preferably the camera means (107) is arranged to screen a plurality of channels (102).

13. The selecting apparatus (100) according to any of the claims **7 to 12, characterised in that** the at least one channel (102) comprises a detector (112) to register the presence of an insect (209) and/or to count the number of insects (209) having passed a predetermined position in the at least one channel (102), preferably registering and/or counting insects (209) at least one of the following locations:
- at the entrance opening (116) of the channel (102);
- adjacent to the entrance side (210) of the separating apparatus (104);
- within the separating apparatus (104); and
- behind the exit side (211) of the separating apparatus (104).

14. A cooperative dwelling (118) for insects, preferably a man-made beehive, comprising at least the following components:
- a housing (113) to store food and/or to house the insect brood;
- at least one aperture (117) for the insects (209) to leave the dwelling and to return into the dwelling (118),
**characterised in that**
the at least one aperture (117) comprises the selecting apparatus (100) according to any of claims **7 to 13,** wherein the selecting apparatus (100) is the only facility to enter and/or to leave the housing (113).

15. A method for separating insects (209) from a group of insects, preferably honey bees, which inhabit a single cooperative dwelling (118),
**characterised in that**
at least the following steps are carried out:
- directing an insect (209) through a channel (102) that is passable by the insects (209) only one at a time by providing at least one entrance opening (116) as the only facility to enter and/or to leave the housing (113) of the cooperative dwelling (118), wherein an insect (209) enters a channel (102) through the entrance opening (116) in which an insect (209) is inhibited to turn direction of forward-walking;
- screening insects (209) regarding predetermined features within the channel (102),
wherein the orientation of the insects (209) is defined by the channel (102);
- based on the screening results deciding by means of a processor (119) whether the respective insect (209) is to be separated from the group of insects;
- based on a decision to separate the respective insect (209) directing the respective insect (209) through a separation opening (212) and/or into a collecting container (111), preferably to treat the respective insect (209), so that the respective insect (209) is inhibited to enter the housing (113),
wherein preferably the method is carried out by means of a selecting apparatus (100) according to any of claims **7 to 13** or by means of a cooperative dwelling (118) according to claim **14.**
